(19) Europäisches Patentamt
European Patent Office
Office européen des brevets

(11) **EP 3 893 104 A1**

(12) **EUROPEAN PATENT APPLICATION**

(43) Date of publication:
**13.10.2021  Bulletin 2021/41**

(21) Application number: **20211946.7**

(22) Date of filing: **04.12.2020**

(51) Int Cl.:
***G06F 5/01*** *(2006.01)*          ***G06F 7/544*** *(2006.01)*
***G06N 3/04*** *(2006.01)*          ***G06N 3/063*** *(2006.01)*
***G06N 3/08*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.03.2020  US 202016832830**

(71) Applicant: **Intel Corporation**
**Santa Clara, CA 95054 (US)**

(72) Inventors:
• **Cambier, Léopold**
  **Stanford, CA 94305 (US)**
• **Bhiwandiwalla, Anahita**
  **Santa Clara, CA 95054 (US)**
• **Gong, Ting**
  **San Jose, CA 95134 (US)**

(74) Representative: **Goddar, Heinz J.**
**Boehmert & Boehmert**
**Anwaltspartnerschaft mbB**
**Pettenkoferstrasse 22**
**80336 München (DE)**

(54) **METHODS AND APPARATUS FOR LOW PRECISION TRAINING OF A MACHINE LEARNING MODEL**

(57)  Methods, apparatus, systems and articles of manufacture for low precision training of a machine learning model are disclosed. An example apparatus includes a low precision converter to calculate an average magnitude of weighting values included in a tensor, the weighting values represented in a high precision format, the low precision converter to calculate a maximal magnitude of the weighting values included in the tensor, determine a squeeze factor and a shift factor based on the average magnitude and the maximal magnitude, and convert the weighting values from the high precision format into a low precision format based on the squeeze factor and the shift factor. A model parameter memory is to store the tensor as part of a machine learning model, the tensor including the weighting values represented in the low precision format, the shift factor, and squeeze factor. A model executor is to execute the machine learning model.

EP 3 893 104 A1

**Description**

FIELD OF THE DISCLOSURE

This disclosure relates generally to training of a machine learning model, and, more particularly, to methods and apparatus for low precision training of a machine learning model.

BACKGROUND

Neural networks and other types of machine learning models are useful tools that have demonstrated their value solving complex problems regarding pattern recognition, natural language processing, automatic speech recognition, etc. Neural networks operate using artificial neurons arranged into one or more layers that process data from an input layer to an output layer, applying weighting values to the data during the processing of the data. Such weighting values are determined during a training process.

BRIEF DESCRIPTION OF THE DRAWINGS

FIG. 1 is a diagram of an example FP8 number encoding using eight bits.
FIG. 2 is a diagram showing ranges of numbers representable by various encodings, and the effect of such encodings on the representable numbers.
FIG. 3 is a block diagram of an example computing system that may be used to train and/or execute a machine learning model using the S2FP8 format.
FIG. 4 is a flowchart 400 representing an example machine readable instructions that may be executed by the computer system of FIG. 3 for low precision training of a machine learning model.
FIG. 5 is a flowchart representing example machine readable instructions that may be executed by the computing system of FIG. 3 to perform a training iteration.
FIG. 6A is a flowchart representing example machine readable instructions that may be executed by the computing system to convert a tensor into a low precision format.
FIG. 6B is a flowchart representing example machine readable instructions that may be executed by the computing system to perform matrix multiplication of two tensors, and return a tensor in a low precision format.
FIG. 7 is a flowchart representing example machine readable instructions that may be executed by the computing system to compute squeeze and/or shift statistics.
FIG. 8 is a block diagram of an example processor platform structured to execute the instructions of FIGS. 4, 5, 6A, 6B, and/or 7 to implement the computing system of FIG. 3.
The figures are not to scale. In general, the same reference numbers will be used throughout the drawing(s) and accompanying written description to refer to the same or like parts.

Descriptors "first," "second," "third," etc. are used herein when identifying multiple elements or components which may be referred to separately. Unless otherwise specified or understood based on their context of use, such descriptors are not intended to impute any meaning of priority, physical order or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

DETAILED DESCRIPTION

Many different types of machine learning models and/or machine learning architectures exist. One particular type of machine learning model is a neural network. Machine learning models typically include multiple layers each having one or more weighting values. Such weighting values are sometimes organized and/or implemented using tensors. Without loss of generality, tensor operations in the machine learning model are often similar to $y_i = \sum_i w_{ij} x_j$, where weighting values (w) are applied to input values (x) and summed to produce an output (y).

Different variations of machine learning models and/or architectures exist. A deep neural network (DNN) is one type of neural network architecture. When training a machine learning model, input data is transformed to some output, and a loss or error function is used to compare if the model predicts an output value close to an expected value. The amount of calculated error is then propagated back from the output to the inputs of the model using stochastic gradient descent (or another training algorithm) and the process repeats until the error is acceptably low enough or a maximum number of iterations is achieved. The parameters learned during this training process are the weights that connect each node. In some examples, hundreds, thousands, tens of thousands, etc., of nodes may be involved in the DNN

In many machine learning models in use today, weights are typically represented as floating point numbers, sometimes represented by thirty-two bits of data. Storing each weighting value as a thirty-two bit floating point number, while accurate, can incur significant resource overhead in terms of memory space used for storing such weighting values and bandwidth for accessing such weighting values. In some examples, quantization of such weights is possible, and enables the weighting values to be stored using a reduced precision format, without sacrificing accuracy of the machine learning model. For example, weights may be quantized to an 8-bit integer value, without an appreciable loss of accuracy of the model. Such quantization may result in a model that is approximately a quarter the size, as compared to a model that is not quantized.

More importantly, because the model uses smaller bit-widths (e.g., 8 bit values, as opposed to 16 bit, 32 bit, 64 bit, 128 bit, etc. values), the model may be executed in a more optimized fashion on hardware that supports such lower bit-width capabilities (e.g., a Field Programmable Gate Array (FPGA), a Digital Signal Processor (DSP), etc.). Such hardware typically consumes fewer hardware resources (e.g., power) and, as an added benefit, frees up compute resources of a central processor to perform other tasks. Thus, it is possible to achieve lower power (and, in some examples, higher throughput) by utilizing these quantized weights. Model size reduction is especially important for embedded devices that may have slower and/or limited processing resources. Reduction of storage, processing, and energy costs is critical on any machine.

Despite the ability to store weighting values in a reduced-precision format, training of a machine learning model in low precision format (e.g., Floating Point 8(FP8)) is notably difficult. Such training typically requires loss scaling to bring gradients into a representable range. If such scaling is not applied, the gradients used in such training tend to underflow to zero. Moreover, loss scaling is difficult from a user perspective. Loss scaling may require insight and/or multiple rounds of trial and error to choose the correct loss scaling value(s) or schedule(s). Further, such loss scaling primarily functions in the backpropagation pass and wont be applied to activations and/or values in the forward-pass lying outside of the representable range.

Example approaches disclosed herein utilize a number representation for the various tensors arising in the training of machine learning models that consumes low amounts of memory, but enables high precision computation of tensors. For example, instead of a fixed number representation (e.g., FP8, which represents an 8-bit floating point number) for all numbers, example approaches disclosed herein utilize a parameterized representation. Each tensor of N numbers is accompanied by two extra statistics, a squeeze ($\alpha$) statistic and a shift ($\beta$) statistic. Those numbers effectively enable adjustment of a minimum and maximum representable number for each tensor in a model independently and dynamically. Within this adaptive range, a low-precision (e.g., 8 bits) floating point number can be used for the end-to-end training. This results in a representation that is more flexible and more adapted to each individual tensor. Those two statistics are then maintained for all tensors throughout the training.

In examples disclosed herein, a shifted and squeezed eight bit floating point representation (S2FP8) is used. Such a representation eliminates the need for complex hardware operations, like Stochastic Rounding to increase precision of the machine learning model. Advantageously, as tensors use less bytes when represented in the S2FP8 format, processing of machine learning models using the S2FP8 representation results in direct bandwidth savings and hence better performances (faster training, less power consumption). The S2FP8 representation also makes it easier (from a user perspective) to train machine learning models in a low precision environment, since it requires less tuning, such as determining the right loss scaling strategy and identifying which layers (if any) to keep in higher precision.

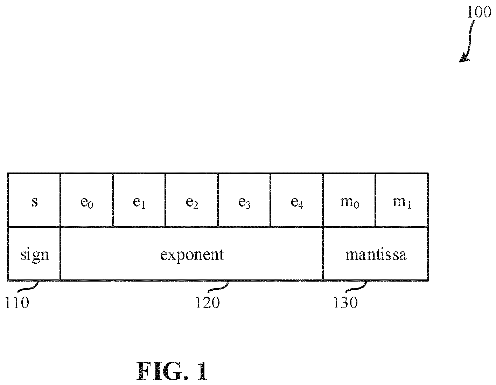

FIG. 1 is a diagram of an example FP8 number encoding 100 using eight bits. The encoding 100 includes a sign component 110, an exponent component 120, and a mantissa component 130. The sign component 110 includes one bit to represent the sign of the number (e.g., positive or negative). The example exponent component 120 includes five binary exponent fields ($e^0$ through $e^4$). The example mantissa component 130 includes two binary mantissa fields. As a result, a number represented using the FP8 representation can take values from (approx.) $2^{-16}$ to $2^{16}$ with an epsilon-machine of $2^{-3}$. Since every number has two mantissa bits, there are four numbers for each power of two. On a log-scale, the number density is a constant equal to four from $2^{-16}$ (the smallest denormal) to $2^{16}$ (the largest normal).

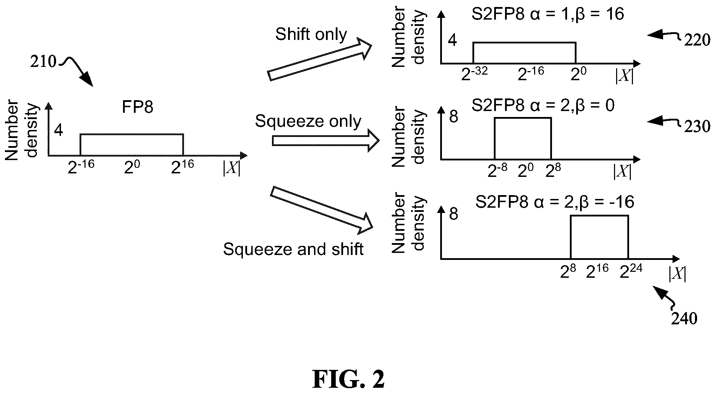

FIG. 2 is a diagram showing ranges of numbers representable by various encodings. A first range 210 represents FP8 numbers, which can be used to represent numbers from (approx.) $2^{-16}$ to $2^{16}$. During the training of machine learning models, weighting values for a given tensor typically occupy various ranges of values. In terms of magnitude, some tensors may range from $2^{-5}$ to $2^5$ while some others may range from $2^{10}$ to $2^{20}$. As a result, some of the representable numbers are not used in many tensors, resulting in wasted resources and increased difficulty in training.

As noted above, example approaches disclosed herein utilize a parameterized number format whose parameters vary for each tensor. More particularly, each tensor X is enriched with two statistics: a squeeze statistic $\alpha_X$ and a shift statistic $\beta_X$. Using these statistics, instead of storing each weighting value $X_i$ as an FP8 number directly, the weighting value is stored as $\hat{X}_i$. $\hat{X}_i$ is stored an FP8 number, where $\hat{X}_i$ is related to $X_i$ through the following equation:

$$\hat{X}_i = \pm \exp(\beta)\, |X_i|^{\alpha} \Leftrightarrow X_i = \pm \left( \exp(-\beta)\, |\hat{X}_i| \right)^{1/\alpha}$$

**Equation 1**

In examples disclosed herein, Equation 1 and the equations listed below are shown using exponential values. However, base two values (or any other base value) may additionally or alternatively be used. Taking the log of Equation 1, above, leads to the following equation:

$$\log\left(|\hat{X}_i|\right) = \beta + \alpha \log(|X_i|)$$

**Equation 2**

In Equation 2, the squeeze statistic and shift statistic are represented by $\alpha$ and $\beta$, respectively, to the original tensor $X$. In examples disclosed herein, values for $\alpha$ and $\beta$ are chosen to bring the average magnitude of $\hat{X}$ to approximately $\overline{\mu} = \log(2^0)$ and, the maximum magnitude around $\overline{m} = \log(2^{15})$. This allows for an optimal use of the FP8 range.

The average magnitude $\mu_X$ and the maximal magnitude $m_x$ of X, are shown in Equations 3 and 4 below, respectively.

$$\mu_X = \sum_{i=1}^{N} \log(|X_i|)$$

**Equation 3**

$$m_X = \max_i \log(|X_i|)$$

**Equation 4**

Equating the average and max of $\log(|\hat{X}|)$ to $\overline{\mu}$ and $\overline{m}$ respectively leads to Equations 5 and 6, below:

$$\alpha = \frac{\overline{m} - \overline{\mu}}{m_X - \mu_X}$$

**Equation 5**

$$\beta = \overline{\mu} - \alpha \mu_X$$

**Equation 6**

What this transformation effectively means is that the number distribution can be shifted (as a result of $\beta$) and squeezed (as a result of $\alpha$) to better fit the actual distribution of numbers. This shifting and/or squeezing is shown in FIG. 2.

In FIG. 2, a shifted range 220 represents a range of numbers that is shifted from the standard range of FP8 values (representing values from $2^{-16}$ to $2^{16}$), to a range from $2^{-32}$ to $2^0$. The shifted range 220 uses a squeeze statistic $\alpha$ of 1 and a shift statistic $\beta$ of 16. In this manner, values from $2^{-32}$ to $2^{-16}$ can additionally be represented (which would not have been represented by the standard FP8 format).

A squeezed range 230 represents a range of numbers that is shifted from the standard range of FP8 values (representing values from $2^{-16}$ to $2^{16}$), to a range from $2^{-8}$ to $2^8$. The squeezed range 230 uses a squeeze statistic $\alpha$ of

2 and a shift statistic $\beta$ of 0. In this manner, values from $2^{-8}$ to $2^8$ can be represented with increased precision as compared to the standard FP8 format, without increasing the amount of data to be stored.

A squeezed and shifted range 240 represents a range of numbers that is shifted from the standard range of FP8 values (representing values from $2^{-16}$ to $2^{16}$), to a range from $2^8$ to $2^{24}$. The squeezed and shifted range 240 uses a squeeze statistic $\alpha$ of 2 and a shift statistic $\beta$ of -16. In this manner, values from $2^8$ to $2^{24}$ can be represented with increased precision as compared to the standard FP8 format, without increasing the amount of data to be stored. Additionally, values in the range of $2^{16}$ to $2^{24}$ can be represented, which would not have been represented by the standard FP8 format.

Using the squeeze and shift statistics is advantageous because small numbers can easily be represented thanks to the shift $\beta$. This removes the need for loss scaling to bring the small gradients into the representable range. Moreover, a narrow distribution (i.e., not occupying the whole range) can be represented with more precision compared to the usual FP8. As a result, the machine epsilon is effectively decreased (i.e., precision is increased) for this specific tensor.

Since the distribution (i.e., range and absolute magnitude) of numbers for each tensor varies throughout the training of a machine learning model, $\alpha$ and $\beta$ are likewise continuously updated and maintained. This is done by computing, on the fly (i.e., before writing the tensor X to memory), and for each tensor, the statistics $\mu_X$ and $m_X$ and then using equations 5 and 6 for computing $\alpha$ and $\beta$. When such computations are implemented in hardware, the mean and max operations are elementwise operations and can be thought of as 'free' computations that already happen when computing a tensor.

While, in examples disclosed herein, the computation of the squeeze statistic and shift statistic is performed at the tensor level (e.g., for all weighting values represented by the tensor), in some examples, the computation may be performed for differently sized data elements (e.g., portions of a tensor, multiple tensors, etc.) In doing so, most of the bandwidth savings are preserved as long as the block size is big enough to reduce the cost of reading the statistics from memory.

In practice, a tensor having weighting values stored in the low-precision number format (S2FP8) are used as inputs and outputs of a model executor (sometimes referred to as a kernel) that computes $C = A \times B$, where $A$ and $B$ are respectively $M \times K$ and $K \times N$ matrices. In such an example, each input tensor ($A$ and $B$) is made of $MK$ and $KN$ numbers (the $\hat{X}_i$ in Equation 1), accompanied by statistics $\alpha$ and $\beta$. Those tensors are then read and used in a matrix-matrix product. The model executor then accumulates the products in a high precision format (e.g., FP32). The model executor would also, on the fly (i.e., before writing $C$ to memory), compute the statistics of $C$. $C$ is then written to memory using those statistics when truncating down the high-precision accumulated number (e.g., FP32) to its low-precision (e.g., S2FP8) representation.

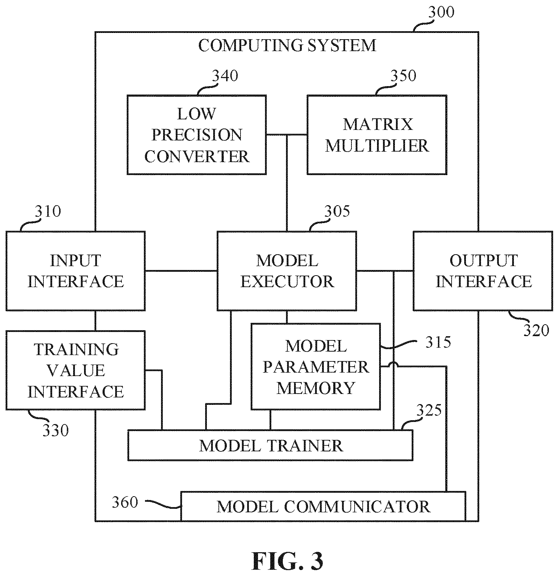

FIG. 3 is a block diagram of an example computing system that may be used to train and/or execute a machine learning model using the S2FP8 format. The example computing system includes a model executor 305 that accesses input values via an input interface 310, and processes those input values based on a machine learning model store in a model parameter memory 315 to produce output values via an output interface 320. In the illustrated example of FIG. 3, the example neural network parameters stored in the neural network parameter memory 315 are trained by the neural network trainer 325 such that input training data received via a training value interface 330 results in output values based on the training data. In the illustrated example of FIG. 3, the model executor 305 utilizes a low precision converter 340 and a matrix multiplier 350 when processing the model during training and/or inference.

The example computing system 300 may be implemented as a component of another system such as, for example, a mobile device, a wearable device, a laptop computer, a tablet, a desktop computer, a server, etc. In some examples, the input and/or output data is received via inputs and/or outputs of the system of which the computing system 300 is a component.

The example model executor 305, the example model trainer 325, the example low precision converter 340, and the matrix multiplier 350 are implemented by one or more logic circuits such as, for example, hardware processors. In some examples, one or more of the example model executor 305, the example model trainer 325, the example low precision converter 350, or the matrix multiplier 350 are implemented by a same hardware component (e.g., a same logic circuit). However, any other type of circuitry may additionally or alternatively be used such as, for example, one or more analog or digital circuit(s), logic circuits, programmable processor(s), application specific integrated circuit(s) (ASIC(s)), programmable logic device(s) (PLD(s)), field programmable logic device(s) (FPLD(s)), digital signal processor(s) (DSP(s)), etc.

In examples disclosed herein, the example model executor 305 executes a machine learning model. The example machine learning model may be implemented using a neural network (e.g., a feedforward neural network). However, any other past, present, and/or future machine learning topology(ies) and/or architecture(s) may additionally or alternatively be used such as, for example, a convolutional neural network (CNN).

To execute a model, the example model executor 305 accesses input data via the input interface 310. In some examples, the model executor provides the input data to the example low precision converter 340 for conversion into a low precision format (to match a low precision format of the model). The example model executor 305 (using the example matrix multiplier 350) applies the model (defined by the model parameters stored in the model parameter memory 315) to the converted input data. The model executor 305 provides the result to the output interface 320 for further use.

The example input interface 310 of the illustrated example of FIG. 3 receives input data that is to be processed by the example model executor 305. In examples disclosed herein, the example input interface 310 receives data from one or more data sources (e.g., via one or more sensors, via a network interface, etc.). However, the input data may be received in any fashion such as, for example, from an external device (e.g., via a wired and/or wireless communication channel). In some examples, multiple different types of inputs may be received.

The example model parameter memory 315 of the illustrated example of FIG. 3 is implemented by any memory, storage device and/or storage disc for storing data such as, for example, flash memory, magnetic media, optical media, etc. Furthermore, the data stored in the example model parameter memory 315 may be in any data format such as, for example, binary data, comma delimited data, tab delimited data, structured query language (SQL) structures, etc. While in the illustrated example the model parameter memory 315 is illustrated as a single element, the model parameter memory 315 and/or any other data storage elements described herein may be implemented by any number and/or type(s) of memories. In the illustrated example of FIG. 3, the example model parameter memory 315 stores model weighting parameters that are used by the model executor 305 to process inputs for generation of one or more outputs. In examples disclosed herein, the model weighting parameters stored in the model parameter memory 315 are organized into tensors. As used herein, a tensor is defined as a data construct including weighting parameters and statistics describing the number format used for the weighting parameters. The statistics enable smaller bit-wise representations of the weighting parameters to be used, resulting in smaller model sizes. As noted above, the statistics include a shift factor and a squeeze factor.

The example output interface 320 of the illustrated example of FIG. 3 outputs results of the processing performed by the model executor 305. In examples disclosed herein, the example output interface 320 outputs information that classifies the inputs received via the input interface 310 (e.g., as determined by the model executor 305.). However, any other type of output that may be used for any other purpose may additionally or alternatively be used. In examples disclosed herein, the example output interface 320 displays the output values. However, in some examples, the output interface 320 may provide the output values to another system (e.g., another circuit, an external system, a program executed by the computing system 300, etc.). In some examples, the output interface 320 may cause the output values to be stored in a memory.

The example model trainer 325 of the illustrated example of FIG. 3 compares expected outputs received via the training value interface 330 to outputs produced by the example model executor 305 to determine an amount of training error, and updates the model based on the amount of error. After a training iteration, the amount of error is evaluated by the model trainer 325 to determine whether to continue training. In examples disclosed herein, errors are identified when the input data does not result in an expected output. That is, error is represented as a number of incorrect outputs given inputs with expected outputs. However, any other approach to representing error may additionally or alternatively be used such as, for example, a percentage of input data points that resulted in an error.

The example model trainer 325 determines whether the training error is less than a training error threshold. If the training error is less than the training error threshold, then the model has been trained such that it results in a sufficiently low amount of error, and no further training is needed. In examples disclosed herein, the training error threshold is ten errors. However, any other threshold may additionally or alternatively be used. Moreover, other types of factors may be considered when determining whether model training is complete. For example, an amount of training iterations performed and/or an amount of time elapsed during the training process may be considered.

The example training value interface 330 of the illustrated example of FIG. 3 accesses training data that includes example inputs (corresponding to the input data expected to be received via the example input interface 310), as well as expected output data. In examples disclosed herein, the example training value interface 330 provides the training data to the model trainer 325 to enable the model trainer 325 to determine an amount of training error.

The example low precision converter 340 of the illustrated example of FIG. 3 converts a value represented in a high precision into a low precision format and accompanying statistics. In examples disclosed herein, the low precision format is an S2FP8 format and accompanying squeeze and shift factors. However, any other low precision format having additional statistics may additionally or alternatively be used. The example low precision converter 340 accesses machine learning parameter values (e.g., a tensor) for converting to low precision. In examples disclosed herein, the entire tensor $(X_i)$ is considered. However, in some examples, portions of the tensor may be considered and, as a result, separate statistics might be calculated for those separate portions of the tensor. Moreover, in some examples, multiple different tensors may be considered at once, resulting in a set of statistics to be used when condensing values for the multiple different tensors. The example low precision converter 340 calculates an average magnitude $\mu_X$, and a maximal magnitude $m_X$. Using the average magnitude $\mu_X$ and the maximal magnitude $m_X$, the example low precision converter 340 determines a squeeze factor ($\alpha$), and a shift factor ($\beta$). In this manner, the example low precision converter 340 computes both the shift factor and the squeeze factor that are used to compress the representations of the values in the tensor.

What this transformation effectively means is that the number distribution can be shifted (as a result of β) and squeezed (as a result of α) to better fit the actual distribution of numbers. The example low precision converter 340 then uses the squeeze factor and the shift factor to convert the tensor (in a high precision format) into the low precision format (e.g., S2FP8).

The example matrix multiplier 350 of the illustrated example of FIG. 3 performs a matrix multiplication of two incoming tensors (including values stored in a low precision format), and outputs a tensor also having a low precision format. The example matrix multiplier 240 accesses input tensors A and B and their accompanying statistics (e.g., the squeeze factor and the shift factor). In examples disclosed herein, the tensors include values stored in a low precision format (e.g., S2FP8). The example matrix multiplier 350 performs a matrix-matrix product of A and B, given their accompanying statistics. The product of the A and B matrices is accumulated in a high precision format, as $C_H$. To output the product of A and B in the same format in which those tensors were received, the example matrix multiplier 350 works with the low precision converter 340 to convert $C_H$ into a low precision format.

The example model communicator 360 of the illustrated example of FIG. 3 enables communication of the model stored in the model parameter memory 315 with other computing systems. In this manner, a central computing system (e.g., a server computer system) can perform training of the model and distribute the model to edge devices for utilization (e.g., for performing inference operations using the model). In examples disclosed herein, the model communicator is implemented using an Ethernet network communicator. However, any other past, present, and/or future type(s) of communication technologies may additionally or alternatively be used to communicate a model to a separate computing system.

While an example manner of implementing the computer system 300 is illustrated in FIG. 3, one or more of the elements, processes and/or devices illustrated in FIG. 3 may be combined, divided, re-arranged, omitted, eliminated and/or implemented in any other way. Further, the example model executor 305, the example input interface 310, the example output interface 320, the example model trainer 325, the example training value interface 330, the example low precision converter 340, the example matrix multiplier 350, the example model communicator 360, and/or, more generally, the example computing system 300 of FIG. 3 may be implemented by hardware, software, firmware and/or any combination of hardware, software and/or firmware. Thus, for example, any the example model executor 305, the example input interface 310, the example output interface 320, the example model trainer 325, the example training value interface 330, the example low precision converter 340, the example matrix multiplier 350, the example model communicator 360, and/or, more generally, the example computing system 300 of FIG. 3 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example model executor 305, the example input interface 310, the example output interface 320, the example model trainer 325, the example training value interface 330, the example low precision converter 340, the example matrix multiplier 350, the example model communicator 360, and/or, more generally, the example computing system 300 of FIG. 3 is/are hereby expressly defined to include a non-transitory computer readable storage device or storage disk such as a memory, a digital versatile disk (DVD), a compact disk (CD), a Blu-ray disk, etc. including the software and/or firmware. Further still, the example computing system 300 of FIG. 3 may include one or more elements, processes and/or devices in addition to, or instead of, those illustrated in FIG. 3, and/or may include more than one of any or all of the illustrated elements, processes, and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

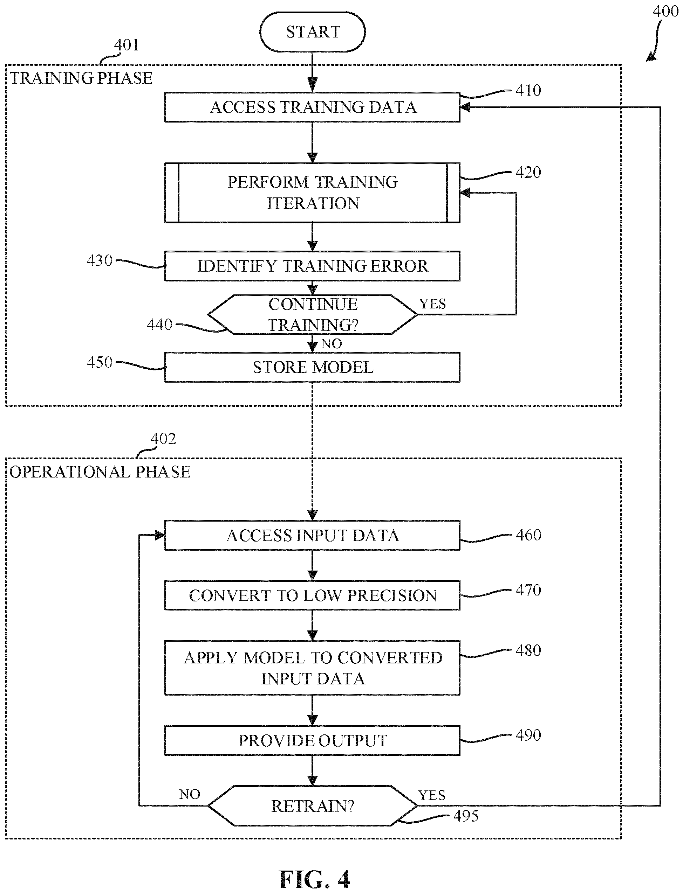

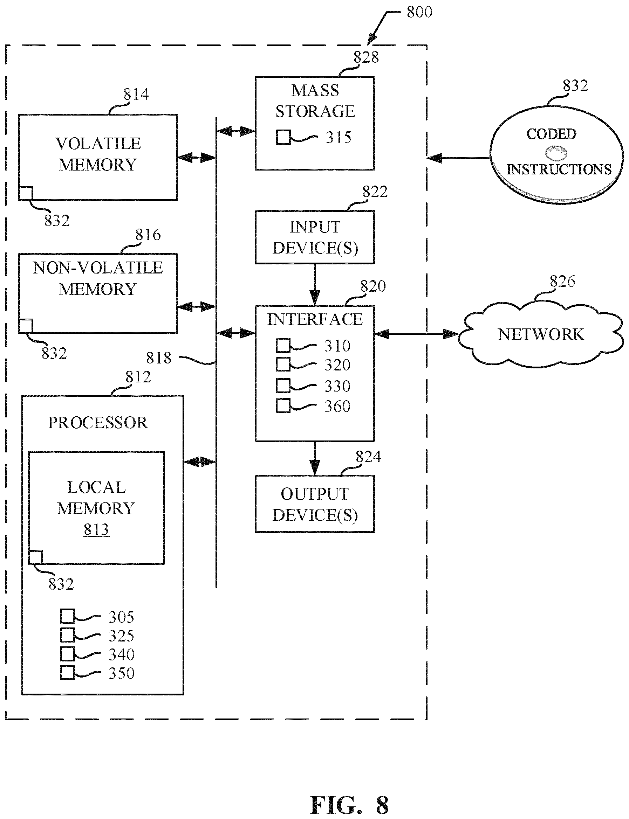

Flowcharts representative of example hardware logic, machine readable instructions, hardware implemented state machines, and/or any combination thereof for implementing the computing system 300 of FIG. 3 are shown in FIGS. 4, 5, 6A, 6B, and/or 7. The machine readable instructions may be one or more executable programs or portion(s) of an executable program for execution by a computer processor such as the processor 812 shown in the example processor platform 800 discussed below in connection with FIG. 8. The program may be embodied in software stored on a non-transitory computer readable storage medium such as a CD-ROM, a floppy disk, a hard drive, a DVD, a Blu-ray disk, or a memory associated with the processor 812, but the entire program and/or parts thereof could alternatively be executed by a device other than the processor 812 and/or embodied in firmware or dedicated hardware. Further, although the example program is described with reference to the flowcharts illustrated in FIGS. 4, 5, 6A, 6B, and/or 7, many other methods of implementing the example computing system 300 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware.

The machine readable instructions described herein may be stored in one or more of a compressed format, an encrypted format, a fragmented format, a compiled format, an executable format, a packaged format, etc. Machine readable instructions as described herein may be stored as data (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement a program such as that described herein.

In another example, the machine readable instructions may be stored in a state in which they may be read by a computer, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, the disclosed machine readable instructions and/or corresponding program(s) are intended to encompass such machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 4, 5, 6A, 6B, and/or 7 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

FIG. 4 is a flowchart 400 representing example machine readable instructions that may be executed by the computer system 300 of FIG. 3 for low precision training of a machine learning model. In general, implementing a ML/AI system involves two phases, a learning/training phase 401 and an operational (e.g., inference) phase 402. In the learning/training phase 401, a training algorithm is used to train a model to operate in accordance with patterns and/or associations based on, for example, training data. In general, the model includes weighting parameters, sometimes represented as tensors, that guide how input data is transformed into output data, such as through a series of nodes and connections within the model to transform input data into output data.

The example process 400 of FIG. 4 begins when the model trainer 325 accesses training data via the training value interface 330. (Block 410). Different types of training may be performed based on the type of ML/AI model and/or the expected output. For example, supervised training uses inputs and corresponding expected (e.g., labeled) outputs to select parameters (e.g., by iterating over combinations of select parameters) for the ML/AI model that reduce model error. As used herein, labelling refers to an expected output of the machine learning model (e.g., a classification, an expected output value, etc.) Alternatively, unsupervised training (e.g., used in deep learning, a subset of machine learning, etc.) involves inferring patterns from inputs to select parameters for the ML/AI model (e.g., without the benefit of expected (e.g., labeled) outputs).

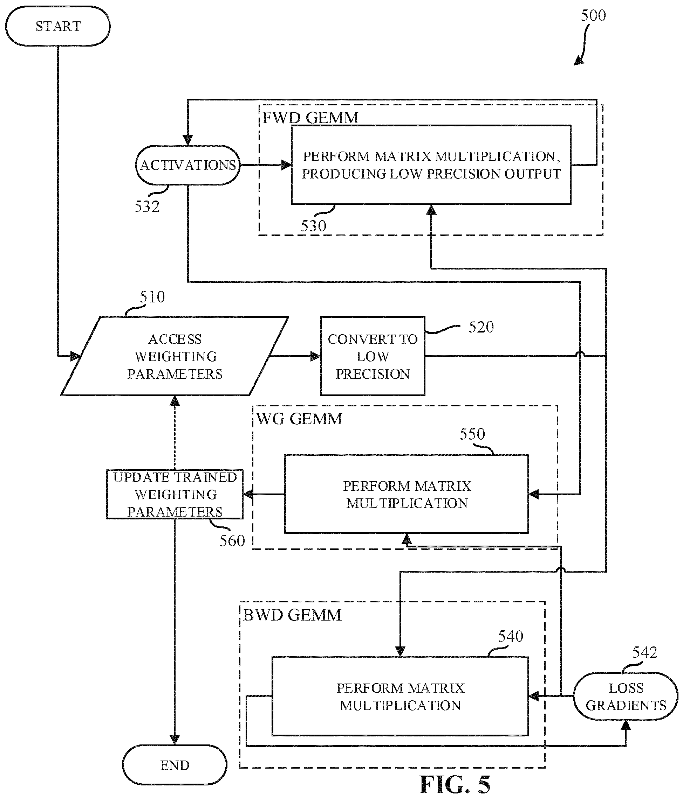

In examples disclosed herein, ML/AI models are trained using stochastic gradient descent. However, any other training algorithm may additionally or alternatively be used. In examples disclosed herein, training is performed until an acceptable level of error is achieved. Such training is performed using training data. The example computing system 300 performs a training iteration by processing the training data to adjust parameters of the model to reduce error of the model. (Block 420). An example training pipeline to implement the training iteration is disclosed below in connection with FIG. 5.

Once the training iteration is complete, the example model trainer 125 determines an amount of training error. (Block 430). The example model trainer 325 determines whether to continue training based on, for example, the amount of training error. (Block 440). Such determination may be based on an amount of training error (e.g., training is to continue if an amount of error exceeds an error threshold). However, any other approach to determining whether training is to continue may additionally or alternatively be used including, for example, an amount of training iterations performed, an amount of time elapsed since training began, etc. If the model trainer 325 determines that training is to continue (e.g., block 440 returns a result of YES), control proceeds to block 420 where another training iteration is executed.

If the model trainer 325 determines that training is not to continue (e.g., block 440 returns a result of NO), the model is stored at the model parameter memory 315 of the example computing system 300. (Block 450). In some examples, the model is stored as an executable construct that processes an input and provides an output based on the network of nodes and connections defined in the model. While in examples disclosed herein, the model is stored in the model parameter memory 315, the model may additionally or alternatively be communicated to a model parameter memory of a different computing system via the model communicator 360. The model may then be executed by the model executor 305.

Once trained, the deployed model may be operated in an operational (e.g., inference) phase 402 to process data. In the inference phase, data to be analyzed (e.g., live data) is input to the model, and the model executes to create an output. This inference phase can be thought of as the computing system "thinking" to generate the output based on what was learned from the training (e.g., by executing the model to apply the learned patterns and/or associations to the live data).

In the operational phase, the example model executor 305 accesses input data via the input interface 310. (Block 460). The example low precision converter 340 converts the input data into a low precision format, to match the low precision format of the model. (Block 470). The example model executor 305 (using the example matrix multiplier 350) applies the model to the converted input data. (Block 480). The example output interface 320 provides an output of the model. (Block 490). Moreover, in some examples, the output data may undergo post-processing after it is generated by the AI model to transform the output into a useful result (e.g., a display of data, an instruction to be executed by a machine, etc.).

The example model trainer 325 monitors the output of the model to determine whether to attempt re-training of the model. (Block 495). In this manner, output of the deployed model may be captured and provided as feedback. By analyzing the feedback, an accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model. If re-training is to occur (e.g., block 495 returns a result of YES), control proceeds to block 410, where the training phase 401 is repeated. If re-training is not to occur (e.g., block 440 returns a result of NO), control returns to block 460, where additional input data may be accessed for subsequent processing.

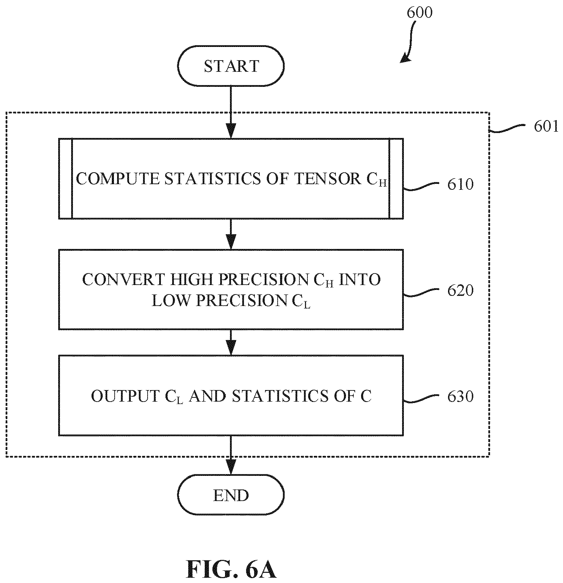

FIG. 5 is a flowchart 500 representing example machine readable instructions that may be executed by the computing system 300 to perform a training iteration. The example process 500 of FIG. 5 begins when the example model executor 305 accesses weighting parameters stored in the model parameter memory 315. (Block 510). Between training iterations, weighting parameters are stored in a FP32 format. The example low precision converter 340 converts the FP32 weighting parameters into a low precision format. (Block 520). An example process for converting values into a low precision format is described in further detail in connection with FIG. 6A, below. The low precision statistics are provided to a forward General Matrix Multiple (GEMM) process, a weighted gradients (WG) GEMM process, and a backward GEMM process.

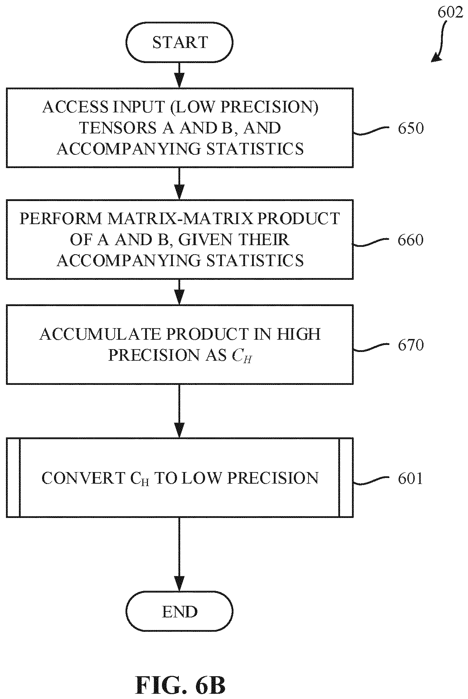

To perform the forward GEMM process, the example matrix multiplier 350 performs a matrix multiplication based on activations 532 and the low precision weighting parameters (Block 530). An example implementation of the matrix multiplication process is disclosed below in connection in with FIG. 6B. The output of the matrix multiplication is stored in the activations 532, for use in subsequent training iterations.

To perform the backward GEMM process, the example matrix multiplier 350 performs a matrix multiplication based on loss gradients 542 and the low precision weighting parameters. (Block 540). An example implementation of the matrix multiplication process is disclosed below in connection with FIG. 6B. The output of the matrix multiplication is stored in the loss gradients 542 for use in subsequent training iterations.

To perform the weighted gradients (WG) GEMM process, the example matrix multiplier 350 performs a matrix multiplication of the loss gradients 542 and the activations 532. (Block 550). An example implementation of the matrix multiplication process is disclosed below in connection with FIG. 6B. The output of the matrix multiplication is provided to the model trainer 325. The example model trainer 325 uses the output to update the trained weighting parameters (e.g., the tensors). (Block 560). In some examples, the weighting parameters are stored in the model parameter memory 315, using the FP32 format. However, during some training iterations, the weighting parameters are stored in a memory (e.g., in a random access memory (RAM), in a register, etc.) to enable faster recall of the weighting parameters for subsequent training iterations. The example process 500 of FIG. 5 then terminates.

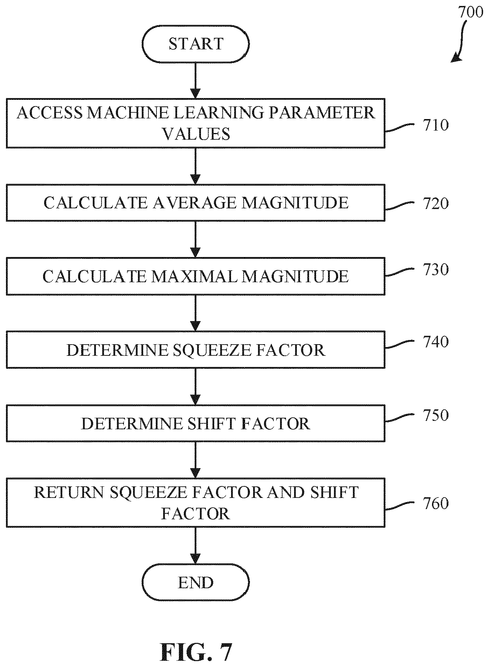

FIG. 6A is a flowchart 600 representing example machine readable instructions that may be executed by the computing system 300 to convert a tensor into a low precision format. The flowchart 600 of FIG. 6 includes instructions 601 for converting the tensor into a low precision format. The example process of FIG. 6A begins when the example low precision converter 340 computes statistics for a tensor $C_H$. (Block 610). In examples disclosed herein, the tensor $C_H$ includes values stored in a high precision format, such as a 32 bit floating point format. In examples disclosed herein, the computed statistics are a squeeze factor and a shift factor, which are subsequently used for converting high precision values (stored in the tensor) into a low precision format. An example approach for computing the statistics is disclosed in further detail in connection with FIG. 7, below. The example low precision converter 340 then converts the high precision tensor $C_H$ into a low precision format tensor $C_L$. (Block 620). In examples disclosed herein, the low precision format uses an S2FP8 (shifted and squeezed 8 bit floating point) format. However, any other data format may additionally or alternatively be used. The example low precision converter 340 then outputs the converted tensor CL and the statistics used to compress the tensor (e.g., the squeeze factor and the shift factor). (Block 630). The example process of FIG. 6A then terminates.

FIG. 6B is a flowchart 602 representing example machine readable instructions that may be executed by the computing system 300 to perform matrix multiplication of two tensors, and return a tensor in a low precision format. The example process 602 of FIG. 6B begins when the example matrix multiplier 240 accesses input tensors A and B and their accompanying statistics. (Block 650). In examples disclosed herein, the tensors include values stored in a low precision format (e.g., S2FP8). The example matrix multiplier 350 performs a matrix-matrix product of A and B, given their accompanying statistics. (Block 660). The product of the A and B is accumulated in a high precision format, as $C_H$. (Block 670). To output the product of A and B in the same format in which those tensors were received, the example low precision converter 340 converts $C_H$ into a low precision format, using the process 601 described above in connection with FIG. 6A. (Block 601). The example process of FIG. 6B then terminates.

FIG. 7 is a flowchart 700 representing example machine readable instructions that may be executed by the computing system 300 to compute squeeze and/or shift statistics. The example process of FIG. 7 begins when the low precision converter 340 accesses machine learning parameter values (e.g., a tensor). (Block 710). In examples disclosed herein, the entire tensor ($X_i$) is considered. However, in some examples, portions of the tensor may be considered and, as a result, separate statistics might be calculated for those separate portions of the tensor. Moreover, in some examples, multiple different tensors may be considered at once, resulting in a set of statistics to be used when condensing values for the multiple different tensors. The example low precision converter 340 calculates an average magnitude $\mu_X$. (Block 720). The example low precision converter 340 calculates the average magnitude $\mu_X$ using Equation 7, below:

$$\mu_X = \sum_{i=1}^{N} \log(|X_i|)$$

**Equation 7**

The example low precision converter 340 calculates the maximal magnitude $m_X$, of X, as shown in Equation 8. (Block 730).

$$m_X = \max_i \log(|X_i|)$$

**Equation 8**

Using the average magnitude $\mu_X$, and the maximal magnitude $m_X$, the example low precision converter 340 determines a squeeze factor ($\alpha$). (Block 740). In examples disclosed herein, the squeeze factor is calculated using Equation 9, below:

$$\alpha = \frac{\overline{m} - \overline{\mu}}{m_X - \mu_X}$$

**Equation 9**

In Equation 9, $\overline{m}$ represents the max of $\log(|\hat{X}|)$, while $\overline{\mu}$ represents the average of $\log(|\hat{X}|)$. The example low precision converter 340 then determines a shift factor $\beta$. (Block 750). In examples disclosed herein, the shift factor ($\beta$) is calculated using Equation 10, below:

$$\beta = \overline{\mu} - \alpha \mu_X$$

**Equation 10**

In this manner, the example low precision converter 340 computes both the shift factor and the squeeze factor that is used to compress the representations of the values in the tensor. What this transformation effectively means is that the number distribution can be shifted (as a result of $\beta$) and squeezed (as a result of $\alpha$) to better fit the actual distribution of numbers. The example low precision converter 340 then returns the squeeze factor and the shift factor as a result of the execution of FIG. 7. (Block 760). The example process of FIG. 7 then terminates.

FIG. 8 is a block diagram of an example processor platform 800 structured to execute the instructions of FIGS. 4, 5, 6A, 6B, and/or 7 to implement the computing system 300 of FIG. 3. The processor platform 800 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a DVD player, a CD player, a digital video recorder, a Blu-ray player, a gaming console, a personal video recorder, a set top box, a headset or other wearable device, or any other type of computing device.

The processor platform 800 of the illustrated example includes a processor 812. The processor 812 of the illustrated example is hardware. For example, the processor 812 can be implemented by one or more integrated circuits, logic circuits, microprocessors, GPUs, DSPs, or controllers from any desired family or manufacturer. The hardware processor may be a semiconductor based (e.g., silicon based) device. In this example, the processor implements the example model executor 305, the example model trainer 325, the example low precision converter 340, and the example matrix multiplier 350.

The processor 812 of the illustrated example includes a local memory 813 (e.g., a cache). The processor 812 of the illustrated example is in communication with a main memory including a volatile memory 814 and a non-volatile memory 816 via a bus 818. The volatile memory 814 may be implemented by Synchronous Dynamic Random Access Memory (SDRAM), Dynamic Random Access Memory (DRAM), RAMBUS® Dynamic Random Access Memory (RDRAM®) and/or any other type of random access memory device. The non-volatile memory 816 may be implemented by flash memory and/or any other desired type of memory device. Access to the main memory 814, 816 is controlled by a memory controller.

The processor platform 800 of the illustrated example also includes an interface circuit 820. The interface circuit 820 may be implemented by any type of interface standard, such as an Ethernet interface, a universal serial bus (USB), a Bluetooth® interface, a near field communication (NFC) interface, and/or a PCI express interface.

In the illustrated example, one or more input devices 822 are connected to the interface circuit 820. The input device(s) 822 permit(s) a user to enter data and/or commands into the processor 812. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 824 are also connected to the interface circuit 820 of the illustrated example. The output devices 824 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 820 of the illustrated example, thus, typically includes a graphics driver card, a graphics driver chip and/or a graphics driver processor.

The interface circuit 820 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 826. The communication can be via, for example, an Ethernet connection, a digital subscriber line (DSL) connection, a telephone line connection, a coaxial cable system, a satellite system, a line-of-site wireless system, a cellular telephone system, etc.

The processor platform 800 of the illustrated example also includes one or more mass storage devices 828 for storing software and/or data. Examples of such mass storage devices 828 include floppy disk drives, hard drive disks, compact disk drives, Blu-ray disk drives, redundant array of independent disks (RAID) systems, and digital versatile disk (DVD) drives.

The machine executable instructions 832 of FIGS. 4, 5, 6A, 6B, and/or 7 may be stored in the mass storage device 828, in the volatile memory 814, in the non-volatile memory 816, and/or on a removable non-transitory computer readable storage medium such as a CD or DVD

From the foregoing, it will be appreciated that example methods, apparatus and articles of manufacture have been disclosed that enable use of tensors stored in a low density (e.g., eight bit) format without losing accuracy of the trained model. Each tensor of N numbers is accompanied by two extra statistics, a squeeze ($\alpha$) statistic and a shift ($\beta$) statistic. Those numbers effectively enable adjustment of a minimum and maximum representable number for each tensor in a model independently and dynamically. Within this adaptive range, a low-precision (e.g., 8 bits) floating point number can be used for the end-to-end training. This results in a representation that is more flexible and more adapted to each individual tensor. As a result, the disclosed methods, apparatus, and articles of manufacture improve the efficiency of using a computing device by enabling smaller models to be created without sacrificing model accuracy. Reduced model sizes likewise reduce the amount of memory used on a computing device to store the model, as well as bandwidth requirements for transmitting the model (e.g., to other computing systems for execution). The disclosed methods, apparatus and articles of manufacture are accordingly directed to one or more improvement(s) in the functioning of a computer.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

Example methods, apparatus, systems, and articles of manufacture for low precision training of a machine learning model are disclosed herein. Further examples and combinations thereof include the following:

Example 1 includes an apparatus for use of a machine learning model, the apparatus comprising a low precision converter to calculate an average magnitude of weighting values included in a tensor, the weighting values represented in a high precision format, the low precision converter to calculate a maximal magnitude of the weighting values included in the tensor, determine a squeeze factor based on the average magnitude and the maximal magnitude, determine a shift factor based on the average magnitude and the maximal magnitude, and convert the weighting values from the high precision format into a low precision format based on the squeeze factor and the shift factor, a model parameter memory to store the tensor as part of a machine learning model, the tensor including the weighting values represented in the low precision format, the shift factor, and squeeze factor, and a model executor to execute the machine learning model.

Example 2 includes the apparatus of example 1, wherein the tensor is a first tensor, the shift factor is a first shift factor, and the squeeze factor is a first squeeze factor, and further including a matrix multiplier to perform a matrix multiplication of the first tensor and a second tensor based on the first shift factor, the first squeeze factor, a second shift factor, and a second squeeze factor, the matrix multiplier to accumulate a product of the matrix multiplication in the high precision format, the low precision converter to convert the product into the low precision format.

Example 3 includes the apparatus of example 2, wherein the low precision converter is to determine a third shift factor and a third squeeze factor to convert the product into the low precision format.

Example 4 includes the apparatus of example 1, further including a model trainer to train the machine learning model using tensors stored in the low precision format.

Example 5 includes the apparatus of example 1, wherein the low precision format is a shifted and squeezed eight bit floating point format.

Example 6 includes the apparatus of example 1, wherein the high precision format is a thirty two bit floating point format.

Example 7 includes at least one non-transitory machine readable storage medium comprising instructions that, when executed, cause at least one processor to at least calculate an average magnitude of weighting values included in a tensor, the weighting values represented in a high precision format, calculate a maximal magnitude of the weighting values included in the tensor, determine a squeeze factor based on the average magnitude and the maximal magnitude, determine a shift factor based on the average magnitude and the maximal magnitude, convert the weighting values from the high precision format into a low precision format based on the squeeze factor and the shift factor, store the tensor as part of a machine learning model, the tensor including the weighting values represented in the low precision format, the shift factor, and the squeeze factor, and execute the machine learning model.

Example 8 includes the at least one non-transitory machine readable storage medium of example 7, wherein the tensor is a first tensor, the shift factor is a first shift factor, and the squeeze factor is a first squeeze factor, and the instructions, when executed, cause the at least one processor to perform a matrix multiplication of the first tensor and a second tensor based on the first shift factor, the first squeeze factor, a second shift factor, and a second squeeze factor, accumulate a product of the matrix multiplication in the high precision format, and convert the product into the low precision format.

Example 9 includes the at least one non-transitory machine readable storage medium of example 8, wherein the instructions, when executed, cause the at least one processor to determine a third shift factor and a third squeeze factor to convert the product into the low precision format.

Example 10 includes the at least one non-transitory machine readable storage medium of example 7, wherein the instructions, when executed, cause the at least one processor to train the machine learning model using tensors stored in the low precision format.

Example 11 includes the at least one non-transitory machine readable storage medium of example 7, wherein the low precision format is a shifted and squeezed eight bit floating point format.

Example 12 includes the at least one non-transitory machine readable storage medium of example 7, wherein the high precision format is a thirty two bit floating point format.

Example 13 includes a method of using a machine learning model, the method comprising calculating an average magnitude of weighting values included in a tensor, the weighting values represented in a high precision format, calculating a maximal magnitude of the weighting values included in the tensor, determining, by executing an instruction with a processor, a squeeze factor based on the average magnitude and the maximal magnitude, determining, by executing an instruction with the processor, a shift factor based on the average magnitude and the maximal magnitude, converting, by executing an instruction with the processor, the weighting values from the high precision format into a low precision format based on the squeeze factor and the shift factor, storing the tensor as part of a machine learning model, the tensor including the weighting values represented in the low precision format, the shift factor, and the squeeze factor, and executing the machine learning model.

Example 14 includes the method of example 13, wherein the tensor is a first tensor, the shift factor is a first shift factor, and the squeeze factor is a first squeeze factor, and the execution of the machine learning model includes performing a matrix multiplication of the first tensor and a second tensor based on the first shift factor, the first squeeze factor, a second shift factor, and a second squeeze factor, accumulating a product of the matrix multiplication in the high precision format, and converting the product into the low precision format.

Example 15 includes the method of example 14, wherein the converting of the product into the low precision format includes determining a third shift factor and a third squeeze factor.

Example 16 includes the method of example 13, further including training the machine learning model using tensors stored in the low precision format.

Example 17 includes the method of example 13, wherein the low precision format is a shifted and squeezed eight bit floating point format.

Example 18 includes the method of example 13, wherein the high precision format is a thirty two bit floating point format.

Example 19 includes an apparatus for use of a machine learning model, the apparatus comprising means for converting to calculate an average magnitude of weighting values included in a tensor, the weighting values represented in a high precision format, the means for converting to calculate a maximal magnitude of the weighting values included in the tensor, determine a squeeze factor based on the average magnitude and the maximal magnitude, determine a shift factor based on the average magnitude and the maximal magnitude, and convert the weighting values from the high precision format into a low precision format based on the squeeze factor and the shift factor, means for storing to store the tensor as part of a machine learning model, the tensor including the weighting values represented in the low precision format, the shift factor, and the squeeze factor, and means for executing the machine learning model.

Example 20 includes the apparatus of example 19, wherein the tensor is a first tensor, the shift factor is a first shift factor, and the squeeze factor is a first squeeze factor, and further including means for multiplying to perform a matrix multiplication of the first tensor and a second tensor based on the first shift factor, the first squeeze factor, a second shift factor, and a second squeeze factor, the means for multiplying to accumulate a product of the matrix multiplication in the high precision format, the means for converting to convert the product into the low precision format.

Example 21 includes the apparatus of example 20, wherein the means for converting is to determine a third shift factor and a third squeeze factor to convert the product into the low precision format.

Example 22 includes the apparatus of example 19, further including means for training the machine learning model using tensors stored in the low precision format.

Example 23 includes the apparatus of example 19, wherein the low precision format is a shifted and squeezed eight bit floating point format.

Example 24 includes the apparatus of example 19, wherein the high precision format is a thirty two bit floating point format.

The following claims are hereby incorporated into this Detailed Description by this reference, with each claim standing on its own as a separate embodiment of the present disclosure.

**Claims**

1. An apparatus for use of a machine learning model, the apparatus comprising:

   a low precision converter to calculate an average magnitude of weighting values included in a tensor, the weighting values represented in a high precision format, the low precision converter to calculate a maximal magnitude of the weighting values included in the tensor, determine a squeeze factor based on the average magnitude and the maximal magnitude, determine a shift factor based on the average magnitude and the maximal magnitude, and convert the weighting values from the high precision format into a low precision format based on the squeeze factor and the shift factor;
   a model parameter memory to store the tensor as part of a machine learning model, the tensor including the weighting values represented in the low precision format, the shift factor, and squeeze factor; and
   a model executor to execute the machine learning model.

2. The apparatus of claim 1, wherein the tensor is a first tensor, the shift factor is a first shift factor, and the squeeze factor is a first squeeze factor, and further including a matrix multiplier to perform a matrix multiplication of the first tensor and a second tensor based on the first shift factor, the first squeeze factor, a second shift factor, and a second squeeze factor, the matrix multiplier to accumulate a product of the matrix multiplication in the high precision format, the low precision converter to convert the product into the low precision format.

3. The apparatus of claim 2, wherein the low precision converter is to determine a third shift factor and a third squeeze factor to convert the product into the low precision format.

4. The apparatus of claim 1, further including a model trainer to train the machine learning model using tensors stored in the low precision format.

5. The apparatus of claim 1, wherein the low precision format is a shifted and squeezed eight bit floating point format.

6. The apparatus of claim 1, wherein the high precision format is a thirty two bit floating point format.

7. A method of using a machine learning model, the method comprising:

   calculating an average magnitude of weighting values included in a tensor, the weighting values represented in a high precision format;
   calculating a maximal magnitude of the weighting values included in the tensor;
   determining, by executing an instruction with a processor, a squeeze factor based on the average magnitude and the maximal magnitude;
   determining, by executing an instruction with the processor, a shift factor based on the average magnitude and the maximal magnitude;
   converting, by executing an instruction with the processor, the weighting values from the high precision format into a low precision format based on the squeeze factor and the shift factor;
   storing the tensor as part of a machine learning model, the tensor including the weighting values represented in the low precision format, the shift factor, and the squeeze factor; and
   executing the machine learning model.

8. The method of claim 6, wherein the tensor is a first tensor, the shift factor is a first shift factor, and the squeeze factor is a first squeeze factor, and the execution of the machine learning model includes:

performing a matrix multiplication of the first tensor and a second tensor based on the first shift factor, the first squeeze factor, a second shift factor, and a second squeeze factor;
accumulating a product of the matrix multiplication in the high precision format; and
converting the product into the low precision format.

9. The method of claim 7, wherein the converting of the product into the low precision format includes determining a third shift factor and a third squeeze factor.

10. The method of claim 6, further including training the machine learning model using tensors stored in the low precision format.

11. The method of claim 6, wherein the low precision format is a shifted and squeezed eight bit floating point format.

12. The method of claim 6, wherein the high precision format is a thirty two bit floating point format.

13. An apparatus comprising means to perform a method as claimed in any preceding claim.

14. Machine-readable storage including machine-readable instructions, when executed, to implement a method or realize an apparatus as claimed in any preceding claim.

100

| s | e<sub>0</sub> | e<sub>1</sub> | e<sub>2</sub> | e<sub>3</sub> | e<sub>4</sub> | m<sub>0</sub> | m<sub>1</sub> |
|---|---|---|---|---|---|---|---|
| sign | exponent | | | | | mantissa | |

110                   120          130

**FIG. 1**

**FIG. 2**

300

COMPUTING SYSTEM

340

LOW PRECISION CONVERTER

350

MATRIX MULTIPLIER

310

INPUT INTERFACE

305

MODEL EXECUTOR

OUTPUT INTERFACE

320

TRAINING VALUE INTERFACE

330

MODEL PARAMETER MEMORY

315

325

MODEL TRAINER

360

MODEL COMMUNICATOR

**FIG. 3**

**FIG. 4**

START

500

FWD GEMM

ACTIVATIONS → PERFORM MATRIX MULTIPLICATION, PRODUCING LOW PRECISION OUTPUT

532

530

510

ACCESS WEIGHTING PARAMETERS → CONVERT TO LOW PRECISION

520

WG GEMM

550

UPDATE TRAINED WEIGHTING PARAMETERS ← PERFORM MATRIX MULTIPLICATION

560

BWD GEMM

540

PERFORM MATRIX MULTIPLICATION ← LOSS GRADIENTS

542

END

**FIG. 5**

600

START

601

COMPUTE STATISTICS OF TENSOR $C_H$ — 610

CONVERT HIGH PRECISION $C_H$ INTO LOW PRECISION $C_L$ — 620

OUTPUT $C_L$ AND STATISTICS OF C — 630

END

**FIG. 6A**

602

START

↓

ACCESS INPUT (LOW PRECISION) TENSORS A AND B, AND ACCOMPANYING STATISTICS — 650

↓

PERFORM MATRIX-MATRIX PRODUCT OF A AND B, GIVEN THEIR ACCOMPANYING STATISTICS — 660

↓

ACCUMULATE PRODUCT IN HIGH PRECISION AS $C_H$ — 670

↓

CONVERT $C_H$ TO LOW PRECISION — 601

↓

END

# FIG. 6B

EP 3 893 104 A1

**FIG. 7**

23

800

828

814

MASS
STORAGE

☐ 315

VOLATILE
MEMORY

832

832

CODED
INSTRUCTIONS

816

822

INPUT
DEVICE(S)

NON-VOLATILE
MEMORY

832

820

826

818

INTERFACE

☐ 310
☐ 320
☐ 330
☐ 360

NETWORK

812

PROCESSOR

LOCAL
MEMORY
813

832

824

OUTPUT
DEVICE(S)

☐ 305
☐ 325
☐ 340
☐ 350

**FIG. 8**

Europäisches
Patentamt

European
Patent Office

Office européen
des brevets

# EUROPEAN SEARCH REPORT

Application Number

EP 20 21 1946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEOPOLD CAMBIER ET AL: "Shifted and Squeezed 8-bit Floating Point format for Low-Precision Training of Deep Neural Networks", ARXIV.ORG, CORNELL UNIVERSITY LIBRARY, 201 OLIN LIBRARY CORNELL UNIVERSITY ITHACA, NY 14853, 16 January 2020 (2020-01-16), XP081579947, * page 1 - page 6 * * Section 6 Conclusion * | 1-14 | INV. G06F5/01 G06F7/544 G06N3/04 G06N3/063 G06N3/08 |
| A | US 2018/322382 A1 (MELLEMPUDI NAVEEN [IN] ET AL) 8 November 2018 (2018-11-08) * paragraph [0133] - paragraph [0149] * | 1-14 | |
| A | US 2018/322607 A1 (MELLEMPUDI NAVEEN [IN] ET AL) 8 November 2018 (2018-11-08) * paragraph [0188] - paragraph [0194] * * paragraph [0211] - paragraph [0241] * * claims 9, 10, 11 * | 1-14 | |
| A | AKHAURI YASH: "HadaNets: Flexible Quantization Strategies for Neural Networks", 2019 IEEE/CVF CONFERENCE ON COMPUTER VISION AND PATTERN RECOGNITION WORKSHOPS (CVPRW), IEEE, 16 June 2019 (2019-06-16), pages 526-534, XP033746952, DOI: 10.1109/CVPRW.2019.00078 [retrieved on 2020-03-04] * abstract * * Sections 1-4.1 * | 1-14 | TECHNICAL FIELDS SEARCHED (IPC) G06N |

The present search report has been drawn up for all claims

| Place of search | Date of completion of the search | Examiner |
|---|---|---|
| Munich | 3 September 2021 | Baudino, A |

EPO FORM 1503 03.82 (P04C01)

**EP 3 893 104 A1**

## ANNEX TO THE EUROPEAN SEARCH REPORT
## ON EUROPEAN PATENT APPLICATION NO.

EP 20 21 1946

03-09-2021

| Patent document cited in search report | Publication date | Patent family member(s) | Publication date |
|---|---|---|---|
| US 2018322382 A1 | 08-11-2018 | US 2018322382 A1<br>US 2019354846 A1 | 08-11-2018<br>21-11-2019 |
| US 2018322607 A1 | 08-11-2018 | CN 108805796 A<br>US 2018322607 A1<br>US 2020265545 A1<br>US 2021110508 A1 | 13-11-2018<br>08-11-2018<br>20-08-2020<br>15-04-2021 |

EPO FORM P0459

For more details about this annex : see Official Journal of the European Patent Office, No. 12/82